# EUROPÄISCHE PATENTSCHRIFT

(11) **EP 1 126 239 B1**
(45) Veröffentlichungstag und Bekanntmachung des Hinweises auf die Patenterteilung: **12.07.2006**
(21) Anmeldenummer: 01810140.2
(22) Anmeldetag: 12.02.2001
(51) Int. Cl.: G01C 9/26, B25H 7/00

(54) **Wasserwaage**
Spirit level
Niveau à bulle

(30) Priorität: 19.02.2000 CH 313002000
(43) Veröffentlichungstag der Anmeldung: 22.08.2001
(73) Patentinhaber: SOLA-Messwerkzeuge GmbH, 6840 Götzis (AT)
(72) Erfinder: Ruther, Oskar, 9430 St. Margrethen (CH)
(74) Vertreter: Gachnang, Hans Rudolf

(56) Entgegenhaltungen:
- DE-A- 2 754 427

## Beschreibung

Gegenstand der Erfindung ist eine Wasserwaage nach dem Oberbegriff des Patentanspruchs 1.

Wasserwaagen sind aus dem Stand der Technik hinlänglich bekannt und umfassen üblicherweise einen im Querschnitt rechteckförmigen Stab aus Metall, Holz oder Kunststoff, in welchem eine oder zwei Libellen zur Ausrichtung der Wasserwaage bezüglich der Horizontalen und der Vertikalen eingesetzt sind. Mit solchen Wasserwaagen lässt sich die horizontale und die vertikale Lage eines Gegenstandes festlegen oder bestimmen.

In der DE-A1 2754427 wird eine Kombinations-Wasserwaage offenbart, die einen rechteckförmigen Profilkörper umfasst, in dem über einen Teilbereich der Gesamtlänge parallel zu den Schmalkanten ein Schlitz eingelassen ist und in welchem zwei Markiergleiter längs geführt sind. Die Markiergleiter sind axial durch scheibenförmige Erweiterungen am Profilstab gehalten. Nachteilig an dieser Wasserwaage ist die hohe Verschmutzungsempfindlichkeit durch Ablagerungen von Staub, Sand oder Zementwasser im Bereich der Auflage der scheibenförmigen Axialführungen und innerhalb des Schlitzes.

Aus der DE-A1 19749026 ist eine weitere Wasserwaage mit Markierungshilfen bekannt, bei der die Markiergleiter den Grundkörper der Wasserwaage auf drei Seiten umfassen.

Oberhalb und unterhalb der Schmalseiten der Wasserwaage sind Markierbohrungen und Zeiger ausgebildet.

Bei dieser bekannten Wasserwaage mit Markiervorrichtungen ist es nachteilig, dass die Markiergleiter mindestens eine der Schmalseiten der Wasserwaage überragen und so die Benutzung der Wasserwaage in der herkömmlichen Weise verhindern. Es kann nämlich die Wasserwaage nicht mehr von unten an einer Decke angelegt oder von oben auf eine Mauer aufgelegt werden, weil die Markierzeiger diese Bereiche überragen.

Hier will die Erfindung Abhilfe schaffen. Der Erfindung liegt die Aufgabe zugrunde, eine Wasserwaage zu schaffen, deren Benutzungsmöglichkeiten (handling) demjenigen einer normalen Wasserwaage entspricht und mit der zusätzlich exakt voneinander beabstandete Markierungen, z.B. beim Anschlagen von Möbelteilen, möglich ist.

Gelöst wird diese Aufgabe durch eine Wasserwaage mit den Merkmalen des Anspruches 1.

Durch die Lagerung des Markiergleiters im Innern der aus einem Profilstab gebildeten Wasserwaage verbleiben die eine Breitseite, nämlich diejenige welche beim Nivellieren an einer Wand zur Auflage gelangt, sowie beide Schmalseiten, die obere und die untere, unberührt. Die Markierzeiger sind, wie auch die Libellen, auf der Vorderseite der Wasserwaage angeordnet, welche in keiner Anwendungsart an einer Wand oder an einem Boden zur Auflage gelangt. Die Markierbohrung, durch welche mit einem Stift, sei es ein Bleistift oder eine Stahlspitze, die Markierung angebracht wird, liegt an der Rückseite und geschützt im innerhalb der Konturen des Profilstabs. Durch eine schmale schlitzförmige Öffnung an der Rückseite des Profilstabs hindurch lässt sich der Markierstift in den zu markierenden Gegenstand eindrücken.
Eine Beschädigung der Markiergleiter kann auch bei nicht sehr sorgfältiger Behandlung jederzeit ausgeschlossen werden.

Anhand illustrierter Ausführungsbeispiele wird die Erfindung näher erläutert. Es zeigen
- Figur 1: eine perspektivische Darstellung der Wasserwaage,
- Figur 2: einen Querschnitt durch den Profilstab in einer ersten Ausgestaltung der Erfindung,
- Figur 3: einen Querschnitt durch den Profilstab gemäss Figur 2 ohne eingesetzten Markiergleiter,
- Figur 4: einen Querschnitt durch den Markiergleiter,
- Figur 5: eine Vorderansicht des Markiergleiters,
- Figur 6: einen Querschnitt durch eine weitere Ausgestaltung des Profilstabs mit eingesetztem Markiergleiter,
- Figur 7: einen Querschnitt durch einen Profilstab mit eingesetztem Markiergleiter in einer weiteren Ausgestaltung mit Führung des Markiergleiters an im Innern des Stabes liegenden Führungsflächen
- Figur 8: einen Querschnitt durch einen Profilstab mit eingesetztem Markiergleiter in einer weiteren Ausgestaltung mit Führung des Markiergleiters an im Innern des Stabes liegenden Führungsflächen,
- Figur 9: einen Querschnitt durch einen Profilstab mit einer Versteifungsrippe an einer Breitseite.

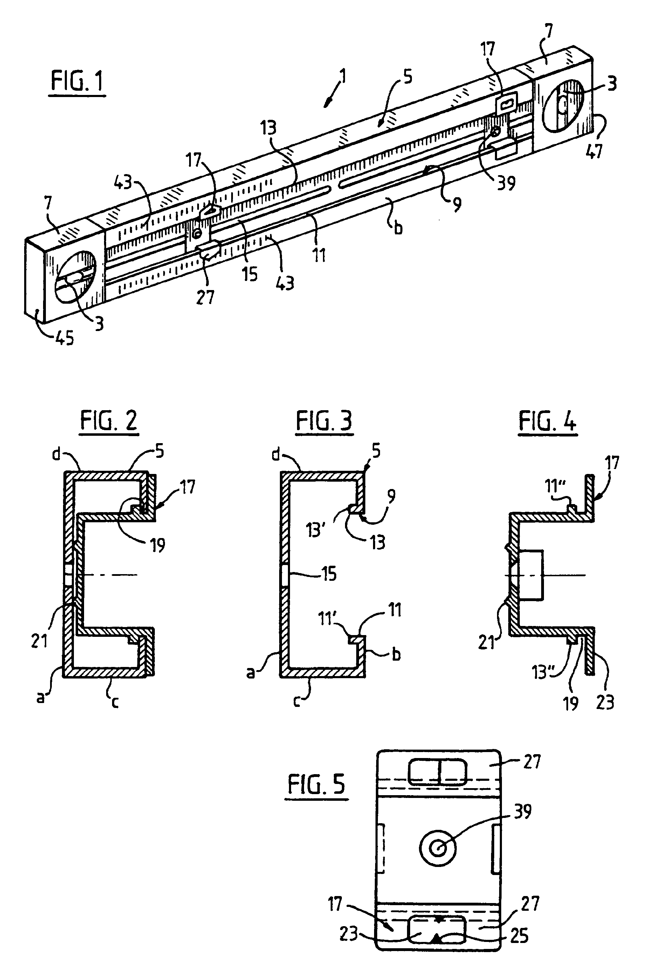

In der Darstellung gemäss Figur 1 ist die Wasserwaage 1 in einer Lage ersichtlich, wie sie bei Gebrauch vorliegt. Die Libelle 3 am linken Ende des Profilstabs 5 liegt in der Mitte und zeigt daher die horizontale Lage an. Die Libelle 3 ist in einem Endstück 7 untergebracht, welches stirnseitig in den Profilstab 5 eingesteckt und kraft- oder formschlüssig gehalten wird. Vorzugsweise ist an beiden Enden des Profilstabs 5 ein Endstück 7 angebracht, von denen das eine eine horizontale Libelle 3 (linke Seite) und am anderen eine vertikale Libelle 3 enthält. Der Profilstab 5 weist einen rechteckförmigen Querschnitt auf, bei dem in der Abbildung 1 vorneliegenden Seitenfläche b ein sich über die gesamte Länge erstreckender Schlitz als Führungsnut 9 ausgebildet ist. Die Führungsnut 9 weist eine untere Kante 11 und eine obere Kante 13 auf, welche die Führungsnut 9 oben und unten begrenzen. In der hinten liegenden Seitenfläche a ist ebenfalls eine schlitzförmige Öffnung 15 ausgebildet.

Diese kann einteilig oder in zwei Abschnitte aufgeteilt sein.

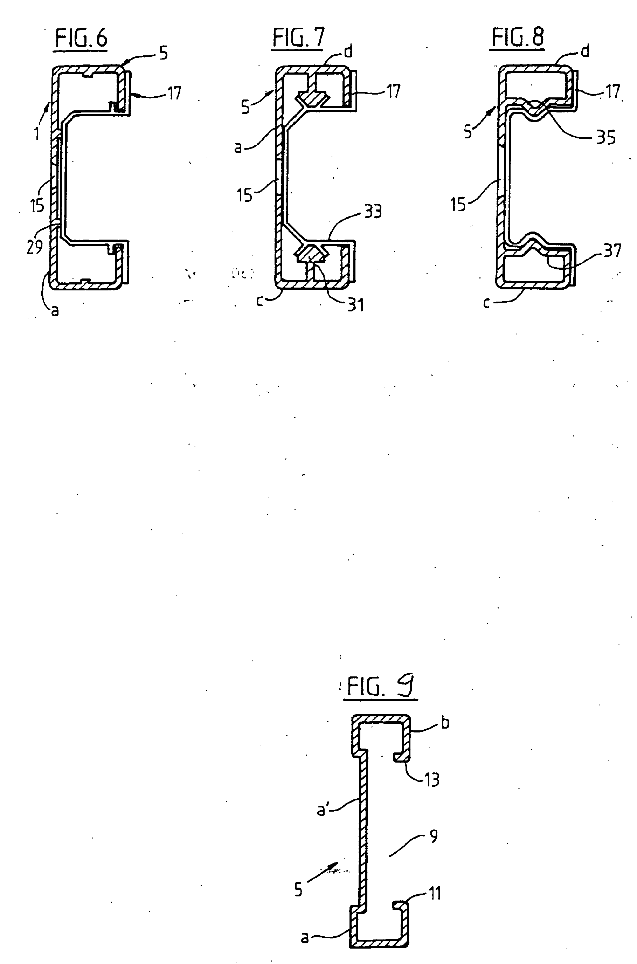

In der ersten Ausgestaltung der Erfindung sind in der Führungsnut 9 und im Innern des Profilstabs 5 zwei Markiergleiter 17 eingesetzt. Diese Markiergleiter 17 werden durch die beiden Kanten 11 und 13 der Führungsnut 9 im wesentlichen spielfrei geführt und selbsthemmend gehalten. Die Markiergleiter 17 weisen zu diesem Zweck Führungsnuten 19 auf, welche die Führungskanten 11 und 13 mindestens teilweise umgreifen. Zusätzlich können die Markiergleiter 17 an deren Rückseite Rippen 21 aufweisen, welche an der Innenseite der hinteren Seite der Fläche a linienförmig aufliegen. Die satte Anlage der Markiergleiter 17 an den Führungskanten 11 und 13 erfolgt durch entsprechende Formgebung und dadurch erreichte elastische Anlage der vorzugsweise aus Kunststoff hergestellten Markiergleiter 17. Die elastische Ausbildung ermöglicht es, die Markiergleiter 17 bei der Montage von vorn durch die Führungsnut 9 einzuklipsen. Die beiden Führungskanten 11 und 13 können, wie in Figur 2 dargestellt, als reine Kanten des Profils ausgebildet sein oder eine nach innen ragende Verbreiterung 11' und 13' aufweisen (Figur 3). An der Vorderseite der Markiergleiter 17 ist mindestens ein Markiermittel ausgebildet, das - wie in Figur 5 ersichtlich - ein Fenster 23 umfasst, in welches mindestens ein Zeiger 25 hineinragt oder in welchem ein Faden als Zeiger eingesetzt ist. Alternativ zu einem Fenster 23 kann am Markiergleiter 17 ein um die Führungskante 11,13 herumführender Zeigerfinger 27 vorgesehen sein (Figur 1, Markiergleiter links).

In der Ausgestaltung des Profilstabs 1 gemäss Figur 6 sind rückwärtige Rippen 29 zur Abstützung des Markiergleiters 17 an der Innenseite des Profilstabs 5 ausgebildet. Am Markiergleiter 17 sind hier keine Rippen mehr erforderlich.

In der Ausführung gemäss Figur 7 erfolgt die Führung des Markiergleiters 17 durch an den Schmalseiten c und d des Profilstabs 1 ausgebildeten, nach innen ragenden Führungsschienen 31, welche mit kongruent ausgebildeten Aufnahmenuten 33 am Markiergleiter 17 zusammenwirken.

Ähnlich ist die Ausbildung der Erfindung gemäss Figur 8. Dort erfolgt die Führung des Markiergleiters 17 ebenfalls durch eine im Innern des Profilstabs 5 liegende Führungsrippe 35, welche an einem rohrförmigen Teil 37 des Profilstabs 5 ausgebildet ist. Die rohrförmigen Teile 37 dienen der Versteifung der Profilstabs 1.

In Figur 9 ist ein Profilstab 5 dargestellt, dessen hintere Seitenfläche a eine Versteifungsrippe a' aufweist, welche die Biegesteifigkeit der Wasserwaage wesentlich erhöht.

In allen Ausführungen ist am Markiergleiter 17 eine Zentrierbohrung 39 ausgebildet, durch die ein Stahldorn oder ein Schreibstift hindurchgeführt werden kann, um hinter der Wasserwaage 1 entsprechende Markierungen an der festgelegten Stelle anzubringen.

An der Vorderseite des Profilstabs 5 sind oberhalb und/oder unterhalb der Führungsnut 9 Markierungen 43 ausgebildet, mit denen die Distanz zwischen den beiden Markiergleitern 17 oder den beiden Stirnflächen 45 bzw. 47 der Wasserwaage 1 einstellbar sind.

## Patentansprüche

1. Wasserwaage (1) mit mindestens einem längsverschiebbaren Markiergleiter (17), umfassend einen Profilstab (5) mit rechteckigem Querschnitt, mit einer Führungsnut (9), in welcher der mindestens eine Markiergleiter eingreifend geführt ist und mit mindestens einer Libelle (3) zur Anzeige der Lage der Wasserwaage (1), **dadurch gekennzeichnet, dass** der Profilstab (5) derart ausgebildet ist, dass der mindestens eine Markiergleiter (17) mit Ausnahme seines mindestens einen Zeigers (27) im Innern der rechteckförmigen Kontur des Profilstabs (5) angeordnet und dort an im Innern des Profilstabs (5) liegenden Führungsflächen geführt ist.

2. Wasserwaage nach Anspruch 1, **dadurch gekennzeichnet, dass** die Führungsnut (9) an mindestens einer der beiden Breitseiten (a,b) des Profilstabs (5) ausgebildet ist, dass auf der hinteren Breitseite (a), welche der Führungsnut (9) gegenüberliegt, parallel zur Nut (17) mindestens eine schlitzförmige Öffnung (15) ausgebildet ist und dass im Markiergleiter (17) im Bereich, welcher über der schlitzförmigen Öffnung (15) liegt, eine Zentrierbohrung (39) ausgebildet ist.

3. Wasserwaage nach einem der Ansprüche 1 oder 2, **dadurch gekennzeichnet, dass** am Markiergleiter (17) mindestens ein aus dem Innern durch die Führungsnut (9) herausragender Zeiger (27) ausgebildet ist.

4. Wasserwaage nach einem der Ansprüche 1 bis 3, **dadurch gekennzeichnet, dass** an mindestens einer der beiden benachbart zur Führungsnut (9) liegenden Flächen der Breitseite (b) ein Massstab oder eine Markierung (43) aufgedruckt ist, über welcher der Zeiger (27) führbar ist.

5. Wasserwaage nach einem der Ansprüche 1 bis 4, **dadurch gekennzeichnet, dass** der Markiergleiter (17) die beiden die Führungsnut (9) abschliessenden Kanten (11,13) teilweise umgreift.

6. Wasserwaage nach einem der Ansprüche 1 bis 5, **dadurch gekennzeichnet, dass** der Markiergleiter (17) an der der die Führungsnut (9) enthaltenden Breitseite (b) gegenüberliegenden Breitseite (a) linienförmig an Rippen (21,29) abgestützt ist.

7. Wasserwaage nach einem der Ansprüche 1 bis 4, **dadurch gekennzeichnet, dass** im Innern des Profilstabs (5) an den Schmalseiten (c,d) des Profilstabs (5) Führungsrippen (31,35) oder Führungsschenkel (41) ausgebildet sind, an denen der Markiergleiter (17) geführt ist.

8. Wasserwaage nach dem Anspruch 7, **dadurch gekennzeichnet, dass** die Führungsrippen (31) auf einem Steg oder auf kastenförmigen Abschnitten (37) an den Schmalseiten (c,d) des Profilstabs (5) angeordnet sind.

9. Wasserwaage nach einem der Ansprüche 1 bis 6, **dadurch gekennzeichnet, dass** die Rippen (21) am Markiergleiter (17) ausgebildet sind.

10. Wasserwaage nach einem der Ansprüche 1 bis 9, **dadurch gekennzeichnet, dass** der Markiergleicher (17) aus Kunststoff hergestellt ist und durch seine Formgebung in elastischer Anlage satt anliegt.

## Claims

1. Spirit level (1) with at least one longitudinally displaceable marking slide (17), said spirit level comprising a profile bar (5) with a rectangular cross section, with a guide channel (9) in which the at least one marking slide is engagingly guided and with at least one bubble (3) for indicating the disposition of the spirit level (1), **characterised in that** the profile bar (5) is designed in such a manner that the at least one marking slide (17), with the exception of its at least one pointer (27), is disposed in the interior of the rectangular contour of the profile bar (5) and is guided in this location by guide faces that are provided in the interior of the profile bar (5).

2. Spirit level according to claim 1, **characterised in that** the guide channel (9) is configured on at least one of the two wide sides (a, b) of the profile bar (5), **in that** there is at least one slot-shaped opening (15) provided parallel to the groove (9) on the rear wide side (a), which is situated opposite the guide channel (9), and **in that** a central bore (39) is configured in the marking slide (17) in the region that is situated above the slot-shaped opening (15).

3. Spirit level according to one of claims 1 or 2, **characterised in that** at least one pointer (27) that extends from the interior through the guide channel (9) is provided on the marking slide (17).

4. Spirit level according to one of claims 1 to 3, **characterised in that** a scale or a marking (43) is printed on at least one of the two faces of the wide side (b) adjacent the guide channel (9), the pointer (27) being moveable over said scale or marking.

5. Spirit level according to one of claims 1 to 4, **characterised in that** the marking slide (17) partially encompasses the two edges (11, 13) that complete the guide channel (9).

6. Spirit level according to one of claims 1 to 5, **characterised in that** the marking slide (17) is supported in a linear manner by ribs (21, 29) on the wide side (a) that is situated opposite the wide side (b) that includes the guide channel (9).

7. Spirit level according to one of claims 1 to 4, **characterised in that** guide ribs (31, 35) or guide portion (41) are provided in the interior of the profile bar (5) on the narrow sides (c, d) of the profile bar (5), the marking slide (17) being guided by said guide ribs or guide portion.

8. Spirit level according to claim 7, **characterised in that** the guide ribs (31) are disposed on a web or on box-shaped sections (37) on the narrow sides (c, d) of the profile bar (5).

9. Spirit level according to one of claims 1 to 6, **characterised in that** the ribs (21) are configured on the marking slide (17).

10. Spirit level according to one of claims 1 to 9, **characterised in that** the marking slide (17) is produced from plastics material and on account of its shaping is flexibly mounted and of a snug fit.

## Revendications

1. Niveau à bulle (1) muni d'au moins un curseur de marquage (17) pouvant coulisser longitudinalement, comprenant un listel profilé (5) de section transversale rectangulaire avec une rainure de guidage (9) dans laquelle le curseur de marquage, prévu au minimum, est guidé avec venue en prise, et au moins une fenêtre à bulle (3) pour indiquer la position dudit niveau à bulle (1), **caractérisé par le fait que** le listel profilé (5) est réalisé de telle sorte que le curseur de marquage (17), prévu au minimum, soit logé à l'intérieur de la configuration rectangulaire dudit listel profilé (5), à l'exception de son index (27) prévu au minimum ; et soit guidé, dans ledit listel, sur des surfaces de guidage situées dans l'espace interne dudit listel profilé (5).

2. Niveau à bulle selon la revendication 1, **caractérisé par le fait que** la rainure de guidage (9) est façonnée sur au moins l'un des deux côtés larges (a, b) du listel profilé (5) ; **par le fait qu'**au moins un orifice (15) en forme de fente est pratiqué parallèlement à la rainure (9), sur le côté large (a) postérieur qui se trouve en vis-à-vis de ladite rainure de guidage (9) ; et **par le fait qu'**un trou de centrage (39) est pratiqué dans le curseur de marquage (17), dans la région placée au-dessus dudit orifice (15) en forme de fente.

3. Niveau à bulle selon l'une des revendications 1 ou 2, **caractérisé par le fait qu'**au moins un index (27), façonné sur le curseur de marquage (17), sort de l'espace interne à travers la rainure de guidage (9).

4. Niveau à bulle selon l'une des revendications 1 à 3, **caractérisé par le fait qu'**une échelle graduée ou un repérage (43), au-dessus de laquelle (duquel) l'index (27) peut être guidé, est imprimé(e) sur au moins l'une des deux surfaces du côté large (b) qui sont voisines de la rainure de guidage (9).

5. Niveau à bulle selon l'une des revendications 1 à 4, **caractérisé par le fait que** le curseur de marquage (17) entoure partiellement les deux bords (11, 13) marquant l'achèvement de la rainure de guidage (9).

6. Niveau à bulle selon l'une des revendications 1 à 5, **caractérisé par le fait que** le curseur de marquage (17) prend appui linéairement, sur des nervures (21, 29), sur le côté large (a) situé en vis-à-vis du côté large (b) qui comporte la rainure de guidage (9).

7. Niveau à bulle selon l'une des revendications 1 à 4, **caractérisé par le fait que** des nervures de guidage (31, 35) ou des branches de guidage (41), sur lesquelles le curseur de marquage (17) est guidé, sont façonnées à l'intérieur du listel profilé (5), sur les côtés étroits (c, d) dudit listel profilé (5).

8. Niveau à bulle selon la revendication 7, **caractérisé par le fait que** les nervures de guidage (31) sont disposées sur les côtés étroits (c, d) du listel profilé (5), sur une membrure ou sur des tronçons (37) en forme de caissons.

9. Niveau à bulle selon l'une des revendications 1 à 6, **caractérisé par le fait que** les nervures (21) sont façonnées sur le curseur de marquage (17).

10. Niveau à bulle selon l'une des revendications 1 à 9, **caractérisé par le fait que** le curseur de marquage (17) est fabriqué en une matière plastique et porte intimement à plat, de manière élastique, du fait de sa configuration.
